Europäisches Patentamt

European Patent Office

Office européen des brevets

(11) Veröffentlichungsnummer: **0 422 749 A1**

# EUROPÄISCHE PATENTANMELDUNG

(21) Anmeldenummer: 90250222.8

(22) Anmeldetag: 06.09.90

(51) Int. Cl.⁵: **G06K 13/077**, G06K 13/103, G06K 13/16

Die Bezeichnung der Erfindung wurde geändert (Richtlinien für die Prüfung im EPA, A-III, 7.3).

(30) Priorität: 11.10.89 DE 3934398

(43) Veröffentlichungstag der Anmeldung: 17.04.91 Patentblatt 91/16

(84) Benannte Vertragsstaaten: AT BE CH DE DK ES FR GB IT LI LU NL SE

(71) Anmelder: MANNESMANN Aktiengesellschaft Mannesmannufer 2
W-4000 Düsseldorf 1(DE)

(72) Erfinder: **Durler, Egon, Dipl.-Ing.**
**Angelweg 1**
**W-7733 Mönchweiler(DE)**

(74) Vertreter: **Presting, Hans-Joachim, Dipl.-Ing.**
**et al**
**Meissner & Meissner Patentanwaltsbüro**
**Herbertstrasse 22**
**W-1000 Berlin 33(DE)**

(54) **Einrichtung zum Auslösen eines Kipphebels, der ein Gebersignal erzeugt.**

(57) Bei einer Einrichtung zum Auslösen eines Kipphebels (1) ist der Kipphebel (1) durch Antrieb eines Kipphebelarmes (1a bzw. 1b) von einer ersten Bezugsstellung (10) in eine zweite Bezugsstellung (11) um eine an einem Rahmen befestigte Schwenkachse (2) schwenkbar.

Um den Kipphebel (1) auch bei geringsten Papiergewichten, d.h. dünnstem Papier, auslösen zu können und um einen exakten Schaltpunkt zu schaffen, wobei ein schlagartiges Kippen des Kipphebels stattfindet, wird vorgeschlagen, daß der erste Kipphebel (1a) in der ersten Bezugsstellung (10) gegen einen ersten Dauermagneten (8) anliegt und daß der zweite Kipphebelarm (16) in der zweiten Bezugsstellung (11) gegen einen zweiten Dauermagneten (9) anliegt, wobei die Abstände (13;14) der beiden Dauermagneten (8,9) jeweils zur Schwenkachse (2) ungleich große Drehmomente ergeben.

Fig.1

EP 0 422 749 A1

# EINRICHTUNG ZUM AUSLÖSEN EINES KIPPHEBELS, MITTELS DESSEN KIPPHEBELARMEN JEWEILS EIN GEBERSIGNAL ERZEUGBAR IST, INSBESONDERE ZUM ABTASTEN BLATTFÖRMIGER AUFZEICHNUNGS- TRÄGER IN BELEGVERARBEITUNGSGERÄTEN

Die Erfindung betrifft eine Einrichtung zum Auslösen eines Kipphebels, mittels dessen Kipphebelarmen ein Gebersignal erzeugbar ist, insbesondere zum Abtasten blattförmiger Aufzeichnungsträger in Belegverarbeitungsgeräten,bei der der Kipphebel durch Antrieb eines Kipphebelarmes von einer ersten Bezugsstellung in eine zweite Bezugsstellung um eine an einem Rahmen befestigte Schwenkachse schwenkbar ist.

Derartige Einrichtungen werden anstelle von Papierdickenfühlern verwendet. In Fällen, in denen nämlich nicht die Dicke eines Papiergutes bestimmt werden soll, weil z.B. von Hand jeweils nur ein Stück in kontrollierter Weise behandelt werden muß, wird nicht etwas das Vorhandensein eines zweiten Stückes gemessen, sondern der Beginn des papierbandes, um die erste Druckzeile festzulegen.

Das Abtasten geschieht nach dem Stand der Technik am einfachsten rein mechanisch mit Hebeln und einem Mikroschalter (DE-Z Elektronik 1970, Heft 1, Seite 12). Dieses Verfahren erfordert jedoch bei sehr dünnem Papier und Folien eine ungewöhnlich hohe Präzision, weshalb sich elektromechanische Aufnehmer besser eignen sollen.

Von diesem Stand der Technik abgesehen, werden derartige Einrichtungen in Multiformdruckern, wie z.B. dem Mannesmann-Kienzle-Drucker D 217, benötigt. Solche Drucker sind als Bankengeräte, Sparbuchdrucker o.dgl. im Einsatz. In solchen Druckern wird das Druckgut z.B. an einen Rechtsanschlag gelegt, so daß durch Bewegung des Druckgutes oder durch Bewegung eines des Druckgut tragenden oder überfahrenden Schlittens eine Linkskantenabtastung erfolgt. Da ein solcher Schlitten auch einen Druckkopf mit Druckelementen trägt, wird ein durch die Papierkante ausgelöstes Gebersignal auch für den Druckbeginn eingesetzt.

Bekannte Kipphebelmechanismen werden gewöhnlich mit Federn unterschiedlichster Form realisiert, indem die Feder über den Hebeldrehpunkt kippt. Dieses Prinzip unterliegt jedoch einer dem Abstand zum Drehpunkt entsprechenden Wirkkraft der Feder, so daß sich eine Federkennlinie mit erst spät und dann langsam abfallendem Drehmoment in bezug auf den Drehwinkel des federbelasteten Hebels ergibt, gegen den die Papierkante anstößt. Somit ist für dieses Hebel- Feder-Prinzip nachteilig, daß bis zum Kippen des Hebels die Auslösekraft für den Hebel ansteigt, ferner, daß die Kräfte und somit die Reibung auf den Hebeldrehpunkt durch den ursprünglichen Wirkwinkel der Feder groß sind und das System träge machen und daß die Anordnung viel Raum in Anspruch nimmt.

Der Erfindung liegt deshalb die Aufgabe zugrunde, auch für geringste Papiergewichte, die nur sehr geringe Auslösekräfte aufbringen können, einen exakten Schaltpunkt zu schaffen, wobei ein schlagartiges Kippen des Kipphebels stattfindet, also ein schnelleres System geschaffen wird.

Die gestellte Aufgabe wird bei der eingangs bezeichneten Einrichtung erfindungsgemäß dadurch gelöst, daß ein zumindet in Kontaktbereichen magnetisierbarer Kipphebel derart schwenkbar gelagert ist, daß der erste Kipphebelarm in der ersten Bezugsstellung gegen einen ersten Dauermagneten anliegt und daß der zweite Kipphebelarm in der zweiten Bezugsstellung gegen einen zweiten Dauermagneten anliegt, wobei die Abstände der beiden Dauermagneten jeweils zur Schwenkachse derart gewählt sind, daß ungleich große Drehmomente zwischen den Dauermagneten und dem jeweiligen Kipphebelarm bestehen, und zwar in dem Sinn, daß zumindest eine der Bezugsstellungen durch eine geringstmögliche Antriebskraft aufhebbar und der Kipphebel schlagartig in die jeweils andere Bezugsstellung überführbar ist. Vorteilhafterweise kann über das Verhältnis der Magnetkräfte sowie deren Abstände von dem Hebeldrehpunkt ein schlagartiges Kippen des Kipphebels durch geringste Auslösekräfte bewirkt werden. Somit ist die Einrichtung auch bei dünnstem Papier, das nur sehr geringe Auslösekräft aufbringt, einsatzfähig. Das System ist außerdem sehr schnell wirkend.

In Ausgestaltung der Erfindung ist vorgesehen, daß die Kräfte der Dauermagnete in Abhängigkeit des Hebelverhältnisses Schwenkachse/erster Dauermagnet zu Schwenkachse/zweiter Dauermagnet, d.h. in Abhängigkeit der Abstände, gewählt sind. Anstelle von Dauermagneten können selbstverständlich auch eingeschaltete Elektromagnete mit ihrem Magnetkern eingesetzt werden. Im übrigen bestimmen sich die Kräfte eines Dauermagneten nach seinen Abmessungen und nach seinen Kompositionswerkstoffen.

Eine besondere Auslöseschwelle mit der zusätzlichen Kraft einer ohnehin vorhandenen Feder und impulsartiger Wirkung wird dadurch erzielt, daß der erste Kipphebelarm in der ersten Bezugsstellung gegen das federnd vorgespannte Schaltelement eines Mikroschalters anliegt.

Eine Weiterentwicklung der Erfindung besteht darin, daß ihre Anordnung auf dem Druckkopfschlitten eines Druckers erfolgt, wobei der Kipphebel parallel zur Bewegungsmittenebene des Druckkopfschlittens schwenkbar befestigt ist und mit einem der Kipphebelarme in die Bahn des Aufzeichnungsträgers ragt.

Die Ausbildung der Kipphebeleinrichtung für einen Drucker wird sodann vorteilhafterweise dahingehend vorgenommen, daß dem ersten Kipphebelarm der am Druckkopfschlitten befestigte Mikroschalter und dem zweiten Kipphebelarm ein am Druckkopfschlitten gelagerter Rückstellbolzen, der mit einer Schenkelfeder verbunden ist und mit seinem Ende durch Anfahren einer Druckwerksseitenwand den Kipphebel in eine Bezugsstellung schwenkt.

Weitere Vorteile werden außerdem erreicht durch Anordnung der Einrichtung auf einem Schlitten für einen optischen Lesekopf oder für eine magnetische Lese- oder Schreibeinrichtung.

Ein Ausführungsbeispiel der Erfindung ist in der Zeichnung dargestellt und wird im folgenden näher beschrieben. Es zeigen:

Fig. 1 eine Vorderansicht der an einem Druckkopfschlitten eines Druckers angeordneten Einrichtung und

Fig. 2 eine zu Fig. 1 gehörende Seitenansicht in Pfeilrichtung A gemäß Fig. 1.

Fig. 3 eine Vorderansicht wie Fig. 1 mit einer veränderten Stellung des Druckkopfschlittens.

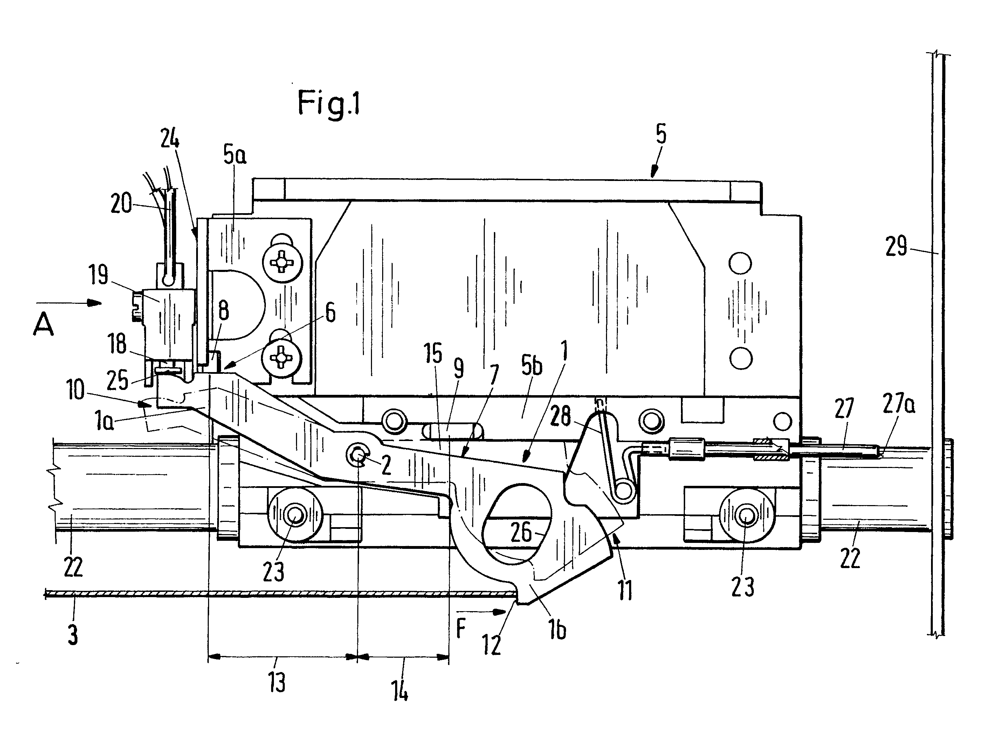

Gemäß Fig. 1 weist die Einrichtung einen Kipphebel 1 auf, der einen ersten Kipphebelarm 1a und einen zweiten Kipphebelarm 1b besitzt und um eine Schwenkachse 2 schwenkbar gelagert ist. Gegen den zweiten Kipphebelarm 1b liegt ein papierener Aufzeichnungsträger 3 jeglicher Dicke an. Die Vorschubrichtung 4 des Aufzeichnungsträgers 3 verläuft quer zur Vorschubrichtung des Druckkopfschlittens 5, an dem die Einrichtung befestigt ist. Anstelle des Druckkopfschlittens 5 kann jeder andere Rahmen treten.

Der Kipphebel 1 weist an den Kipphebelarmen 1a und 1b jeweils metallische Kontaktbereiche 6 und 7 auf, die mit Dauermagneten 8 und 9 in Kontakt treten können. Dabei befindet sich, wie gezeichnet, der erste Kipphebelarm 1a in der ersten Bezugsstellung 10, währenddem in dieser Phase der zweite Kipphebelarm 1b außerhalb der zweiten Bezugsstellung 11 liegt. In der ersten Bezugsstellung 10 liegt der Kipphebelarm 1a mit dem Kontaktbereich 6 an dem Dauermagneten 8 an und in der zweiten Bezugsstellung 11 liegt der Kipphebelarm 1b mit seinem metallischen Kontaktbereich 7 an dem Dauermagneten 9 an, wobei sich eine Anschlagfläche 12 in der Bezugsstellung 11 außerhalb der Bewegungsbahn des Aufzeichnungsträgers 3 befindet.

Die Abstände 13 und 14 jeweils von der Schwenkachse 2 aus gemessen zu den Dauermagneten 8 und 9 sind derart gewählt, daß unter Berücksichtigung der Kraft des jeweiligen Dauermagneten 8 oder 9 ungleich große Drehmomente zwischen den Dauermagneten 8 bzw. 9 und dem jeweiligen Kipphebelarm 1a, 1b bestehen. Die Drehmomente sind derart ausgelegt, daß zumindest eine der Bezugsstellungen (10) durch eine geringstmögliche Antriebskraft, "F", z.B. durch den Aufzeichnungsträger 3 aufhebbar und der Kipphebel 1 wie gezeichnet in die andere Bezugsstellung 11 überführbar ist. Hierbei ist zu beachten, daß der Dauermagnet 9 in einem solchen Abstand 15 zu dem Kontaktbereich 7 angeordnet ist, daß hier bereits das Magnetfeld versucht, den Kipphebelarm 1b anzuziehen. Die hierbei fehlende Antriebskraft "F" ist äußerst gering und wird durch den Aufzeichnungsträger 3 aufgebracht.

Es ist möglich, diese fehlende Antriebskraft dadurch aufzubringen, daß die Kräfte der Dauermagnete 8 bzw. 9 in Abhängigkeit des Hebelverhältnisses der Schwenkachse 2 und des ersten Dauermagneten 8/zur Schwenkachse 2 und dem zweiten Dauermagneten 9 gewählt sind. Demnach sind die Dauermagnete 8 und 9 entsprechend den Abständen 13 und 14 auszuwählen. Der erste Kipphebelarm 1a, in der ersten Bezugsstellung 10 gegen das federnd vorgespannte Schaltelement 18 eines Mikroschalters 19 in Kontakt gebracht, wird beim Einleiten der Antriebskraft "F" durch das Schaltelement 18 zusätzlich beschleunigt und erhöht damit die Dynamik des Systems. Der Mikroschalter 19 ist mit für die Bewegung des Druckkopfschlittens 5 ausgestalteten Schleppleitungen 20 versehen.

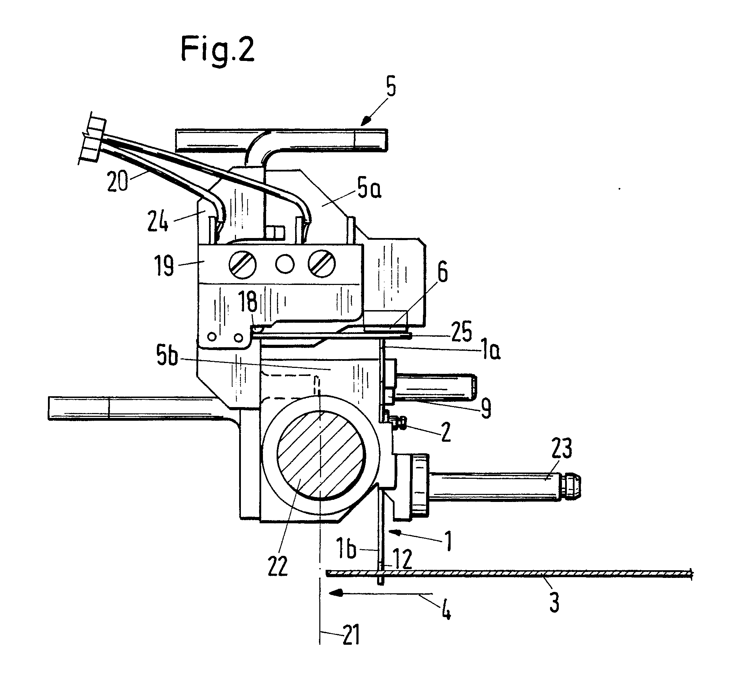

Die vorstehend beschriebene Einrichtung ist an dem Druckkopfschlitten 5 eines Druckers angeordnet, wobei der Kipphebel 1 parallel zur Bewegungsmittenebene 21 (Fig. 2) des Druckkopfschlittens 5 um die Schwenkachse 2 schwenkbar befestigt ist und mit einem der Kipphebelarme 1b quer in die Bahn, d.h. quer zur Vorschubrichtung 4 des Aufzeichnungsträgers 3, ragt, wie in Fig. 1 mit ausgezogenen Linien dargestellt ist.

Der Druckkopfschlitten 5 wird über eine zylindrische Längsstange 22 und an Querstangen 23, die mit Rollen ausgerüstet sind, geführt. Der Dauermagnet 8 ist an einem Rahmenteil 5a befestigt und der Dauermagnet 9 an einem entsprechenden Rahmenteil 5b. An der einen Stirnseite 24 des Druckkopfschlittens 5 ist der Mikroschalter 19 mit dem Schaltelement 18, das seitlich versetzt ist, angeordnet, wobei ein Auslegerarm 25 den Abstand zum Kipphebel 1 überbrückt. Der Kipphebel 1 ist ferner durch eine Ausnehmung 26 gewichtssparend ausgebildet.

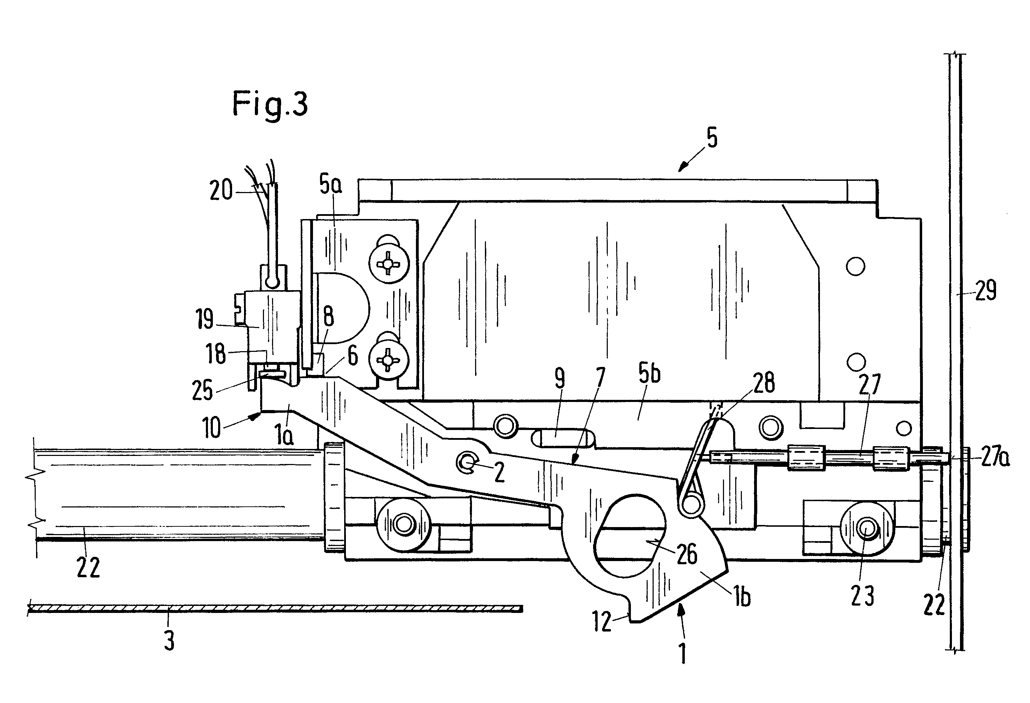

Beim Bedrucken eines Aufzeichnungsträgers (wie z.B. Belegen, Sparbüchern, Schecks usw.) befindet sich der Kipphebel 1 in der zweiten Bezugsstellung 11, d.h. in einer Ruhestellung außerhalb der Bahn des Aufzeichnungsträgers 3, ohne diesen zu berühren. Im Betriebsfall, falls die Papierkante abgetastet werden soll, ist vorgesehen, daß dem ersten Kipphebelarm 1a der am Druckkopfschlitten 5 befestigte Mikroschalter 19 und dem zweiten Kipphebelarm 1b ein am Druckkopfschlitten 5 gelagerter Rückstellbolzen 27, der mit einer Schenkelfeder 28 verbunden ist und mit seinem Ende 27a durch Anfahren einer Druckwerksseitenwand 29 den Kipphebel 1 in die Bezugsstellung 10 schwenkt. In Fig. 3 befindet sich der Rückstellbolzen 27 in Kontakt mit der Druckwerksseitenwand 29, wobei die Schenkelfeder 28 den Kipphebel 1 in die Bezugsstellung 10 schwenkt.

Das Signal des Mikroschalters 19 kann gleichzeitig beim Rückstellen des Kipphebels 1 der Normierung des Druckkopfschlittens 5 dienen, so daß für diese Funktion ein zusätzlicher Signalgeber eingespart werden kann.

## Ansprüche

1. Einrichtung zum Auslösen eines Kipphebels, mittels dessen Kipphebelarm ein Gebersignal erzeugbar ist, insbesondere zum Abtasten blattförmiger Aufzeichnungsträger in Belegverarbeitungsgeräten, bei der der Kipphebel durch Antrieb eines Kipphebelarmes von einer ersten Bezugsstellung in eine zweite Bezugsstellung um eine an einem Rahmen befestigte Schwenkachse schwenkbar ist, dadurch gekennzeichnet, daß ein zumindest in Kontaktbereichen (6;7) magnetisierbarer Kipphebel (1) derart schwenkbar gelagert ist, daß der erste Kipphebelarm (1a) in der ersten Bezugsstellung (10) gegen einen ersten Dauermagneten (8) anliegt und daß der zweite Kipphebelarm (1b) in der zweiten Bezugsstellung (11) gegen einen zweiten Dauermagneten (9) anliegt, wobei die Abstände (13;14) der beiden Dauermagneten (8,9) jeweils zur Schwenkachse (2) derart gewählt sind, daß ungleich große Drehmomente zwischen den Dauermagneten (8,9) und dem jeweiligen Kipphebelarm (1a,1b) bestehen, und zwar in dem Sinn, daß zumindest eine der Bezugsstellungen (10,11) durch eine geringstmögliche Antriebskraft aufhebbar und der Kipphebel (1) schlagartig in die jeweils andere Bezugsstellung (10;11) überführbar ist.
2. Einrichtung nach Anspruch 1, dadurch gekennzeichnet, daß die Kräfte der Dauermagnete (8,9) in Abhängigkeit des Hebelverhältnisses Schwenkachse (2)-/erster Dauermagnet (8) zu Schwenkachse (2)-/zweiter Dauermagnet (9), d.h. in Abhängigkeit der Abstände (13;14), gewählt sind.
3. Einrichtung nach den Ansprüchen 1 und 2, dadurch gekennzeichnet, daß der erste Kipphebelarm (1a) in der ersten Bezugsstellung (10) gegen das federnd vorgespannte Schaltelement (18) eines Mikroschalters (19) anliegt.
4. Einrichtung nach einem der Ansprüche 1 oder 2, gekennzeichnet durch ihre Anordnung auf dem Druckkopfschlitten (5) eines Druckers, wobei der Kipphebel (1) parallel zur Bewegungsmittenebene (21) des Druckkopfschlittens (5) schwenkbar befestigt ist und mit einem der Kipphebelarme (1b) in die Bahn des Aufzeichnungsträgers (3) ragt.
5. Einrichtung nach Anspruch 4, dadurch gekennzeichnet, daß dem ersten Kipphebelarm (1a) der am Druckkopfschlitten (5) befestigte Mikroschalter (19) und dem zweiten Kipphebelarm (1b) ein am Druckkopfschlitten (5) gelagerter Rückstellbolzen (27) der mit einer Schenkelfeder (28) verbunden ist und mit seinem Ende (27a) durch Anfahren einer Druckwerksseitenwand (29) den Kipphebel (1) in eine Bezugsstellung (10) schwenkt.
6. Einrichtung nach einem oder mehreren der Ansprüche 1 bis 3, gekennzeichnet durch ihre Anordnung auf einem Schlitten für einen optischen Lesekopf oder für eine magnetische Lese- oder Schreibeinrichtung.

# Fig.1

EP 0 422 749 A1

# Fig.2

Fig.3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl⁵) |
|---|---|---|---|
| A | WO - A1 - 83/02 348 (N.C.R.) <br> * Gesamt; besonders Anspruch 1; Position 140; Ansprüche 9,10; Position 198; Fig. 1A, 1B * | 1 | G 06 K 13/077 <br> G 06 K 13/103 <br> G 06 K 13/16 |
| A | WO - A1 - 84/02 596 (N.C.R.) <br> * Seite 5, Zeile 31 - Seite 7, Zeile 13; Position 78; Fig. 1-3,5 * | 1 | |
| A | DE - B2 - 2 619 620 (LANDIS & GYR) <br> * Spalte 3, Zeile 63 - Spalte 4, Zeile 21; Position 8; Fig. 1,2 * | 1 | |

RECHERCHIERTE SACHGEBIETE (Int. Cl⁵)

G 06 K

Der vorliegende Recherchenbericht wurde für alle Patentansprüche erstellt.

| Recherchenort | Abschlußdatum der Recherche | Prüfer |
|---|---|---|
| WIEN | 17-01-1991 | MIHATSEK |